# FASCICULE DE BREVET EUROPEEN

(11) **EP 1 012 662 B1**
(45) Date de publication et mention de la délivrance du brevet: **06.01.2010**
(21) Numéro de dépôt: 99929434.1
(22) Date de dépôt: 08.07.1999
(51) Int. Cl.: G02F 1/153, G02F 1/15, H01M 10/36, H01M 6/18

(54) **PROCEDE DE TRAITEMENT D'UN DISPOSITIF ELECTROCHIMIQUE**
VERFAHREN ZUR BEHANDLUNG EINER ELEKTROCHEMISCHEN VORRICHTUNG
METHOD FOR TREATING AN ELECTROCHEMICAL DEVICE

(30) Priorité: 10.07.1998 FR 9808928
(43) Date de publication de la demande: 28.06.2000
(73) Titulaire: Saint-Gobain Glass France, 92400 Courbevoie (FR)
(72) Inventeur: BETEILLE, Fabien, F-75017 Paris (FR); GIRON, Jean-Christophe, F-75012 Paris (FR)
(74) Mandataire: Le Cam, Stéphane Georges Elie
(86) Numéro de dépôt international: PCT/FR1999/001653
(87) Numéro de publication internationale: WO 2000/003289

(56) Documents cités:
- EP-A- 0 363 028
- EP-A- 0 831 360
- WO-A-95/19588
- US-A- 5 612 153
- PATENT ABSTRACTS OF JAPAN vol. 011, no. 399 (P-651), 26 décembre 1987 (1987-12-26) -& JP 62 163021 A (CANON INC), 18 juillet 1987 (1987-07-18)

## Description

La présente invention concerne le domaine des dispositifs électrochimiques comportant au moins une couche électrochimiquement active susceptible d'insérer réversiblement et simultanément des ions et des électrons, en particulier des dispositifs électrochromes. Ces dispositifs électrochimiques sont notamment utilisés pour fabriquer des vitrages dont la transmission lumineuse et/ou énergétique ou la réflexion lumineuse peuvent être modulées au moyen d'un courant électrique. Ceux-ci peuvent aussi être utilisés pour fabriquer des éléments de stockage d'énergie tels que des batteries ou encore des capteurs de gaz, ou des éléments d'affichage.

Si l'on prend l'exemple particulier des systèmes électrochromes, on rappelle que ces derniers, de manière connue, comportent une couche d'un matériau capable d'insérer de façon réversible et simultanée des ions, notamment des cations, et des électrons et dont les états d'oxydation correspondant aux états inséré et désinséré sont de coloration distincte, un des états étant généralement transparent. La réaction d'insertion ou de désinsertion est commandée par une alimentation électrique adéquate, notamment par application d'une différence de potentiel adaptée. Le matériau électrochrome, en général à base d'oxyde de tungstène, doit ainsi être mis en contact avec une source d'électrons telle qu'une couche électroconductrice transparente et une source d'ions telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome de sorte que, macroscopiquement, l'électrolyte apparaît comme un simple médium d'ions.

La contre-électrode doit être constituée ou d'une couche neutre en coloration ou du moins transparente quand la couche électrochrome est à l'état décoloré. L'oxyde de tungstène étant un matériau électrochrome cathodique, c'est-à-dire que son état coloré correspond à l'état le plus réduit, un matériau électrochrome anodique tel que l'oxyde de nickel, l'oxyde d'iridium ou l'oxyde de vanadium, de façon non limitative, est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline...) ou le bleu de Prusse.

On trouvera la description de tels systèmes par exemple dans les brevets européens EP-0 338 876, EP-0 408 427, EP-0 575 207 et EP-0 628 849.

Actuellement, on peut ranger ces systèmes dans deux catégories, selon le type d'électrolyte qu'ils utilisent :
↪ soit l'électrolyte se présente sous la forme d'un polymère ou d'un gel, par exemple un polymère à conduction protonique tel que ceux décrits dans les brevets européens EP-0 253 713 et EP-0 670 346, ou un polymère à conduction d'ions lithium tels que ceux décrits dans les brevets EP-0 382 623, EP-0 518 754 ou EP-0 532 408
↪ soit l'électrolyte est une couche minérale, conducteur ionique mais isolant électroniquement, on parle alors de systèmes électrochromes « tout solide ».

Pour la description d'un système « tout-solide », on pourra se reporter aux demandes EP-0867752 et EP-0 831 360 C'est principalement à ce type de systèmes que l'invention s'intéresse, car il présente un avantage clair en termes de facilité de fabrication. En effet, avec une telle configuration, on peut déposer l'ensemble des couches du système, successivement, sur un unique substrat porteur (alors que dans le système où l'électrolyte est un polymère ou un gel, on est généralement contraint de fabriquer deux « demi-cellules » que l'on vient assembler par l'électrolyte, ce qui nécessite de fait d'utiliser deux substrats porteurs et de gérer deux séries de dépôts de couches en parallèle sur chacun d'entre eux).

Quelle que soit la configuration adoptée, une contrainte de ce type de système électrochimique consiste à lui conférer un « effet mémoire » suffisant selon l'application envisagée. On entend par ce terme la capacité qu'a le système à se maintenir dans un état donné une fois l'alimentation électrique interrompue. Dans le cas d'un vitrage électrochrome, cet état est généralement son état coloré. En l'absence d'alimentation électrique, il tend à revenir vers son état décoloré. Le but est évidemment que cet effet mémoire puisse durer le plus longtemps possible, de manière à ce que l'utilisateur, par le biais de l'alimentation électrique du système, puisse effectivement contrôler son état de façon satisfaisante. Dans les faits, on cherche par exemple à ce que le vitrage électrochrome puisse rester à l'état coloré, hors tension, pendant plusieurs heures, 10 à 20 heures.

Dans les faits, cet objectif est difficile à atteindre, car le système doit faire face à un courant de fuite d'une couche électroconductrice à l'autre, notamment en périphérie du système, qui tend à le faire retourner dans son état d'équilibre, c'est-à-dire dans son état décoloré.

Une première solution a consisté à accepter l'existence de ces courants de fuite, et à ré-alimenter en électricité le système quand il est dans son état coloré, selon une périodicité donnée, pour les compenser. Elle n'est cependant pas pleinement satisfaisante, ne serait-ce que parce que ces courants de fuite peuvent varier d'un vitrage à l'autre, et dans ce cas, la coloration atteinte par deux vitrages similaires soumis à une même alimentation électrique est différente

Une seconde solution a consisté à marger l'une des deux couches électroconductrices, c'est-à-dire à effectuer le dépôt des couches de façon à ce qu'elles soient décalées à leur périphérie, et ainsi à supprimer/réduire le courant de fuite d'une couche à l'autre à leurs périphéries respectives. La solution est efficace, mais complique le procédé de fabrication du système : elle impose notamment de déposer au moins une des deux couches électroconductrices en employant un masque sur le substrat porteur.

On connaît par les documents WO 95/19588, EP363028 et JP 62 163021 un procédé de traitement d'un dispositif électrochimique comportant au moins un substrat porteur muni d'un empilement de couches fonctionnelles comprenant au moins une couche électrochimiquement active susceptible d'insérer réversiblement et simultanément des ions et qui est disposée entre deux couches électroconductrices, avec un empilement comprenant au moins, successivement, une première couche électroconductrice, une couche électrochimiquement active susceptible d'insérer de manière réversible des ions, une couche d'électrolyte, une seconde couche électrochimiquement active susceptible d'insérer de manière réversible lesdits ions, et une seconde couche électroconductrice, dont on a inhibé localement la fonctionnalité d'au moins une couche fonctionnelle.

Le but de l'invention est alors de remédier à ces inconvénients, en proposant notamment un nouveau procédé de traitement des dispositifs électrochimiques décrits plus haut afin d'améliorer leurs performances, tout particulièrement afin de limiter/supprimer les risques de court-circuits, les courants dits de fuite et, de fait, afin d'augmenter leur « effet mémoire », et ceci en privilégiant la simplicité dans sa mise en oeuvre.

L'invention a tout d'abord pour objet un procédé de traitement d'un dispositif électrochimique, comportant au moins un substrat porteur muni d'un empilement de couches fonctionnelles comprenant au moins une couche électrochimiquement active susceptible d'insérer réversiblement et simultanément des ions et des électrons disposée entre deux couches électroconductrices. Il s'agit notamment d'un dispositif électrochimique du type électrochrome, avec un empilement de couches fonctionnelles dont au moins, successivement :
↪ une première couche électroconductrice,
↪ une première couche électrochimiquement active susceptible d'insérer de manière réversible des ions comme des cations tels que H⁺, Li⁺ ou des anions tels que OH⁻, notamment en un matériau électrochrome anodique (ou respectivement cathodique),
↪ une couche d'électrolyte,
↪ une seconde couche électrochimiquement active susceptible d'insérer de manière réversible lesdits ions, notamment en un matériau électrochrome cathodique (ou respectivement anodique),
↪ une seconde couche électroconductrice.

Le procédé de l'invention se caractérise par le fait que l'on vient inhiber localement la fonctionnalité d'au moins une des couches fonctionnelles, à l'exception d'une des couches électroconductrices, notamment à l'exception de la première (celle la plus proche du substrat porteur), de manière à délimiter dans l'empilement une zone non périphérique inactive.

Dans le contexte de l'invention, on comprend par « couche » soit des couches unitaires, soit la superposition de plusieurs couches remplissant conjointement la même fonction. C'est notamment le cas de la couche d'électrolyte, qui peut être constituée de deux ou trois couches superposées, comme cela ressort par exemple de la demande EP-0867752 précité.

Toujours dans le contexte de l'invention, l'empilement de couches peut comprendre également d'autres couches, notamment des couches de protection, des couches barrières, des couches à fonction optique ou d'accrochage.

L'intérêt de l'invention réside dans la simplicité de sa mise en oeuvre, outre son efficacité. En effet, le procédé permet de traiter les couches une fois qu'elles sont (toutes) déposées de façon standardisée, sans avoir à faire des dépôts de couches sélectifs, avec des systèmes de masques ou autres pour obtenir un « margeage » ou un décalage par exemple. L'invention est donc particulièrement intéressante dans le cas d'empilements de couches fonctionnelles ne contenant que des couches en matériau solide : (les systèmes « tout-solide » évoqués plus haut).

On entend dans le contexte de l'invention par matériau « solide » , tout matériau ayant la tenue mécanique d'un solide, en particulier tout matériau essentiellement minéral ou hybride, à savoir partiellement minéral et partiellement organique comme les matériaux que l'on peut obtenir en utilisant un procédé de dépôt par synthèse sol-gel.

En effet, particulièrement dans le cas d'un tel système tout-solide, on peut déposer l'ensemble des couches les unes après les autres sur le substrat porteur, de préférence avec la même technique de dépôt, sur la même ligne de production (un dépôt par pulvérisation cathodique assistée par champ magnétique notamment), puis traiter selon l'invention l'ensemble de l'empilement excepté l'une des couches électroconductrices. Bien sûr, l'invention comprend aussi la variante alternative consistant à interrompre le processus de dépôt, et à ne traiter qu'une partie de l'empilement déjà déposé, puis à poursuivre le dépôt des couches « manquantes » pour constituer l'empilement « entier ». (Dans le cas d'un système non « tout-solide », l'ajout des couches « manquantes » peut se faire par l'assemblage du substrat avec un second substrat lui-aussi fonctionnalisé de façon appropriée).

Garder une des couches électroconductrices intègre, non affectée par le traitement d'inhibition selon l'invention, permet d'assurer une alimentation électrique correcte aux bornes du dispositif. Pour leur préserver cette intégrité, différentes possibilités sont offertes, qui seront exposées par la suite.

Dans un example utile à la comprehension de liinvention, le but de cette « inhibition » locale de l'empilement de couches fonctionnelles est de désactiver le dispositif à sa périphérie, selon une bordure de quelques millimètres de large par exemple, de façon à ce que, dans cette périphérie, le système reste en permanence dans son état le moins conducteur ionique et/ou électronique (état décoloré pour la plupart des systèmes électrochromes). Cette bordure « inactive » n'est pas pénalisante en soi puisqu'on peut en contrôler les dimensions, et qu'elle peut ainsi être aisément dissimulée, si cela est jugé nécessaire sur le plan esthétique, par le système de pose, d'encadrement, de joint périphérique du dispositif qui est toujours présent, tout particulièrement quand il s'agit d'un vitrage électrochrome.

En fait, cette bordure revient à couper volontairement le circuit électrique à la périphérie du système, supprimant ainsi tout risque de court-circuit qui serait dû à un passage du courant entre les deux couches électroconductrices. Dans l'absolu, le circuit électrique peut être coupé en inhibant seulement une des couches électrochimiquement actives à insertion réversible et/ou la couche d'électrolyte et/ou une des couches électroconductrices à leurs périphéries. Mais comme évoqué plus haut, la simplicité va plutôt dans le sens du traitement de tout l'empilement sauf la première couche. Il est à noter que les court-circuits sont notamment dus soit à un contact direct entre les deux couches électroconductrices, soit de façon indirecte via une des couches électrochimiquement actives quand celles-ci s'avèrent être également conducteurs électroniques dans un de leurs états (inséré ou non inséré). Ainsi, l'oxyde de tungstène est meilleur conducteur électronique dans son état coloré, et il en est de même pour l'oxyde de nickel et l'oxyde d'iridium.

L'invention propose deux variantes principales pour obtenir cet effet d'inhibition localisée.

La première variante consiste à inhiber localement la fonctionnalité d'une des couches au moins en incisant celle(s)-ci sur son (leurs) épaisseur(s) selon une ligne fermé permettant de délimiter la zone inactive de l'empilement entre ladite ligne fermée et le bord/chant de l'empilement (en considérant que toutes les couches ou la majorité d'entre elles ont des dimensions voisines et/ou sont exactement superposées les unes aux autres. En fait, usuellement, la première couche électroconductrice est de dimensions un peu supérieures à toutes les autres, pour faciliter sa connexion électrique avec la seconde couche, ce qui permet de poser sur sa surface qui « dépasse » de l'empilement les éléments de connectique nécessaires.

Cette incision permet ainsi d'obtenir une rainure qui vient couper le circuit comme expliqué plus haut et laisser la périphérie du dispositif hors tension.

De préférence, on incise selon une ligne fermée ayant, dans des proportions plus réduites, un profil voisin ou identique à celui du bord de l'empilement (ou du bord de la première couche qui subit l'incision, si les couches sous-jacentes sont de dimensions légèrement différentes, notamment la première comme évoqué plus haut). On a ainsi une bordure inactive qui « suit » le pourtour du dispositif et aisément camouflable.

Avantageusement, on opère l'incision par tout moyen mécanique, notamment tranchant, ou par irradiation laser. Un mode de réalisation consiste à laisser le dispositif immobile pendant le traitement et à monter le moyen mécanique/l'émetteur laser sur un organe mobile, un autre mode de réalisation consistant à faire l'inverse.

D'autres moyens peuvent être utilisés pour réaliser l'incision par abrasion. Ainsi, on peut utiliser un émetteur de jet de gaz ou de liquide sous pression (azote, air), ou un émetteur de particules abrasives (billes de verre, de corindon, grenaille, billes de CO₂ solide ...).

Cette opération d'incision peut être opérée indifféremment quand le système est à l'état coloré ou décoloré. Quand elle est réalisée par un faisceau laser, il peut être intéressant de choisir un état coloré, pour augmenter l'absorption du laser par l'empilement à la longueur d'onde utilisée.

La seconde variante consiste à inhiber localement la fonctionnalité d'au moins une des couches de l'empilement (toujours à l'exception de l'une des couches électroconductrices) en la (les) dégradant à sa (leurs) périphérie(s), notamment par un traitement thermique approprié ou par une irradiation laser appropriée.

Dans ce cas de figure, on réalise de préférence la dégradation non pas selon une ligne fermée, comme l'incision selon la première variante, mais sur toute la surface de la bordure périphérique que l'on veut ainsi « désactiver « .

Le traitement thermique ou le traitement au laser se sont avérés très efficaces pour modifier suffisamment la (les) couche(s) affectée(s) sur le plan de leur composition chimique ou de leur structure, pour les rendre ainsi inactives. Il s'agit vraisemblablement d'une détérioration faisant intervenir, par exemple, une déshydratation et/ou une modification structurelle (notamment par cristallisation) au moins partielle de la couche en question, sans la supprimer.

On a plutôt intérêt à réaliser ce traitement de dégradation sur l'empilement de couches quand il se trouve dans son état décoloré : en effet, c'est dans cet état que les couches de type électrochrome sont les moins conducteurs électroniques.

On constate que l'irradiation avec une lumière laser peut soit être employée dans le contexte de la première variante, provoquant une véritable ablation localisée, soit dans le contexte de la seconde variante en ne faisant que la modifier. Sa précision et son efficacité rendent le laser très intéressant, il suffit ensuite d'en moduler les paramètres de fonctionnement, comme cela sera détaillé par la suite.

On peut aussi prévoir de faire plusieurs lignes fermées d'incision périphériques, chaque ligne fermée étant d'un périmètre inférieur à celle qui lui est adjacente et plus proche du bord de l'empilement qu'elle, et étant inclue dans la surface « intérieure » de l'empilement délimitée par celle-ci (les lignes fermées successives pouvant ainsi être concentriques).

Il en est de même pour la variante où l'on opère une dégradation : on peut pratiquer non pas une zone dégradée périphérique, mais plusieurs, par exemple concentriques et séparées ou non les unes des autres par une portion d'empilement non traitée.

Il est à noter que les deux variantes décrites plus haut sont alternatives ou cumulatives. Il est ainsi possible, notamment, d'effectuer une ligne d'incision périphérique et en outre de dégrader la zone qui se trouve entre ladite ligne et le bord de l'empilement.

Selon l'invention on inhibe localement la fonctionnalité d'au moins une des couches fonctionnelles à l'exception d'une des couches électroconductrices de manière à délimiter un « contour inactif » ou une « zone inactive » non périphérique dans le dispositif.

Cette inhibition peut se faire selon l'une ou l'autre des deux variantes exposées plus haut, à savoir soit par une dégradation localisée, soit par une ablation localisée de la ou des couches en question, avec les mêmes moyens, à savoir traitement thermique, traitement par laser ou par tout moyen tranchant.

Cette opération peut avoir deux buts différents. Elle peut tout d'abord permettre de réduire/supprimer les court-circuits non périphériques dans l'empilement quand le dispositif est en fonctionnement, en désactivant les zones où des défauts ponctuels entraînent des contacts électriques entre les deux couches électroconductrices, les zones ainsi rendues inactives étant très petites donc peu ou pas discernables. Pour rendre ces zones encore moins discernables, on peut faire en sorte, une fois traitées, de les colorer de façon permanente par un jet d'encre d'une couleur foncée, voisine de celle du système à l'état coloré. Ainsi, les zones « corrigées » se trouvent complètement masquées quand le système est à l'état coloré (état où des points qui resteraient clairs seraient les plus perceptibles). On peut ainsi aisément et efficacement corriger les défauts ponctuels du système.

Cette opération peut aussi permettre d'inscrire des motifs dans le dispositif, motifs n'apparaissant que quand le système est dans son état coloré. Ainsi, on peut suivant la façon dont on opère la dégradation, l'ablation, obtenir des motifs « pleins » ou délimités par des contours à volonté.

On a vu précédemment que le mode de réalisation préféré de l'invention consistait à ce que le procédé de traitement affecte l'ensemble des couches fonctionnelles sauf la (première) couche électroconductrice. Pour préserver l'intégrité de celle-ci, on peut avantageusement sélectionner ses paramètres de dépôt pour la rendre plus résistante, plus dure, plus dense que les autres couches et tout particulièrement que l'autre couche électroconductrice. On module ainsi les caractéristiques de la couche en combinaison avec celles des moyens utilisés pour le traitement afin que celle-ci ne soit pas modifiée.

Si cette couche est, par exemple, déposée par pulvérisation cathodique assistée par champ magnétique, on peut, de manière connue, en moduler la densité en jouant sur la pression dans le chambre de dépôt, la température de dépôt, etc.

On peut aussi jouer sur les techniques de dépôt utilisées. Ainsi, on peut déposer la couche que l'on veut préserver par une technique de dépôt à chaud du type pyrolyse (en phase solide, liquide ou gazeuse CVD), bien adaptée pour obtenir des couches d'oxydes métalliques dopés et connue pour permettre l'obtention de couches particulièrement dures et résistantes, et déposer tout ou partie des autres couches par une technique de dépôt ne permettant généralement pas d'atteindre des duretés aussi élevées, du type technique de dépôt sous vide (pulvérisation cathodique, évaporation).

L'invention a également pour objet le dispositif électrochimique de type électrochrome traité selon le procédé décrit plus haut, et qui présente au moins une zone inactive non périphérique restant en permanence à l'état décoloré, notamment sous forme d'une marge de largeur par exemple d'au plus 5 mm.

Le dispositif traité selon l'invention présente de préférence en fonctionnement (à l'état coloré) un courant de fuite (courant de fuite total par unité de longueur du périmètre) inférieur ou égal à 20µA/cm, notamment inférieur ou égal à 10µA/cm ou à 5µA/cm.

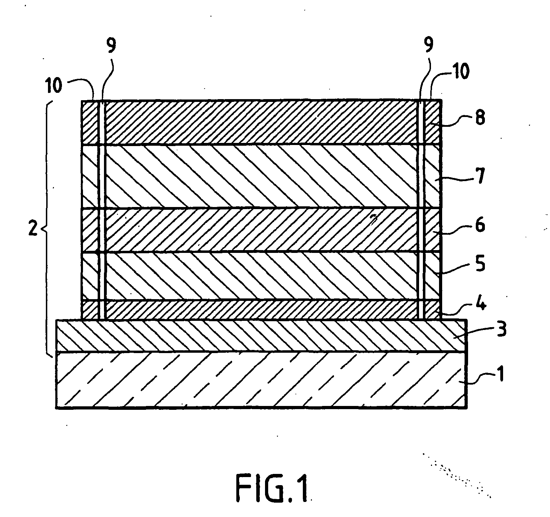

D'autres détails et caractéristiques avantageuses de l'invention ressortent de la description faite ci-après d'un mode de réalisation non limitatif en référence au dessin annexé qui représente :
□ **figure 1** : un vitrage électrochrome en coupe.

Cette figure est extrêmement schématique et ne respecte pas les proportions entre les différents éléments représentés, ceci afin d'en faciliter la lecture. Ne sont en outre pas représentées, notamment, toutes les connexions électriques connues en soi.

L'exemple décrit ci-après concerne un vitrage électrochrome de type « tout-solide » suivant l'enseignement des brevets EP-0867752 et EP-0 831 360 précités. L'invention ne se limite cependant pas à une telle configuration.

Ainsi, comme évoqué plus haut, l'invention peut s'appliquer à tout type de systèmes électrochimiques, notamment des vitrages électrocommandables de type vitrage électrochrome. Il se présente de préférence sous la forme d'un empilement de couches fonctionnelles comprenant successivement une couche électroconductrice de préférence transparente, une couche électrochrome dite cathodique susceptible d'insérer réversiblement des ions tels que H⁺, Li⁺, Na⁺, Ag⁺ ou OH⁻, une couche d'électrolyte, éventuellement une contre-électrode sous la forme d'une seconde couche électrochrome dite anodique également susceptible d'insérer réversiblement lesdits ions et enfin une seconde couche électroconductrice.

En ce qui concerne la nature des couches électroconductrices du dispositif, il y a deux variantes possibles : on peut avoir recours à des matériaux à base d'oxyde métallique dopé tels que de l'oxyde d'étain dopé au fluor Sn02:F ou l'oxyde d'indium dopé à l'étain ITO. On peut aussi utiliser des couches en métal ou en alliage métallique, par exemple à partir d'or Au, d'argent Ag ou d'aluminium A1. Le dispositif possédant généralement deux couches électroconductrices, elles peuvent être soit toutes les deux métalliques, soit toutes les deux à base d'oxyde dopé, soit l'une à base de métal et l'autre à base d'oxyde dopé. Elles peuvent en outre être constituées d'une superposition de couches conductrices, par exemple d'une couche métallique au moins associée à une couche d'oxyde métallique dopé.

Pour constituer la couche de matériau électrochrome cathodique, on peut choisir un matériau ou un mélange de matériaux choisi(s) dans le groupe comprenant l'oxyde de tungstène WO₃, l'oxyde de molybdène MoO₃, l'oxyde de vanadium V₂O₅, l'oxyde de niobium Nb₂O₅, l'oxyde de titane TiO₂, un matériau « cermet » (association de matériau métallique et céramique, notamment sous la forme de particules métalliques dans une matrice céramique) tel que WO₃/Au ou WO₃/Ag, un mélange d'oxydes de tungstène et de rhénium WO₃/ReO₃. Ces matériaux conviennent notamment en cas d'insertion réversible d'ions lithium. Dans le cas où le dispositif fonctionne par insertion réversible de protons, on peut utiliser les mêmes matériaux, mais hydratés cette fois.

Pour constituer la couche de matériau électrochrome anodique, on peut choisir un matériau qui répond à la formule MₓA_{y}U_{z}, avec M un métal de transition, A l'ion utilisé pour l'insertion réversible, par exemple un alcalin ou un proton, et U un chalcogène tel que l'oxygène ou le soufre.

Il peut s'agir, notamment dans le cas d'une insertion d'ions protons H⁺, d'un composé ou d'un mélange de composés appartenant au groupe comprenant LiNiOₓ, IrOₓH_{y}, IrOₓH_{y}N_{z}, NiOₓ, NiOₓH_{y}N_{z}, RhOₓ, CoOₓ, MnOₓ, RuOₓ. Dans le cas d'une insertion réversible d'ions lithium Li⁺, on choisit plutôt un composé ou un mélange de composés appartenant au groupe comprenant LiNiOₓ, LiMn₂O₄, InOₓ, LiₓIrO_{y}, LiₓSₙO_{y}, NiOₓ, CeOₓ, TiOₓ, CeOₓ-TiOₓ, RhOₓ, CoOₓ, CrOₓ, MnOₓ.

En ce qui concerne le choix du matériau électrolyte, il y en a en fait de deux types comme cela a été évoqué précédemment.

Dans le contexte de l'invention, on privilégie les électrolytes sous forme de matériau solide, notamment à base d'oxyde métallique, comprenant de préférence une couche en un matériau conducteur ionique susceptible d'insérer de manière réversible les ions mais dont le degré d'oxydation est maintenu essentiellement constant, comme un matériau à propriétés électrochromes du type WO₃ tel que décrit dans le brevet EP-0867752. L'invention inclut cependant les autres types d'électrolyte (polymère, gel, ...).

Le système fonctionnel de l'élément selon l'invention peut donc se trouver disposé soit entre deux substrats, soit sur un seul substrat, plus particulièrement dans le cas d'un système « tout-solide ». Les substrats porteurs rigides sont de préférence en verre, en polymère acrylique ou allylique, en polycarbonate ou en certains polyuréthanes. Les substrats porteurs peuvent aussi être souples, flexibles et destinés à être feuilletés à des substrats rigides, il peut s'agir de polycarbonate souple, de polyéthylène téréphtalate (PET)... Le feuilletage peut être réalisé avec des feuilles de polymère intercalaires de type thermoplastique tel que le polyvinylbutyral (PVB), l'éthylènevinylacétate (EVA) ou certains polyuréthanes.

Ces vitrages peuvent ainsi présenter une structure « monolithique », c'est-à-dire avec un seul substrat rigide, ou une pluralité de substrats rigides, avoir une structure feuilletée et/ou de vitrage multiple, ou encore une structure dite de vitrage asymétrique à couche plastique extérieure, notamment à base de polyuréthane à propriétés d'absorption d'énergie, structure notamment décrite dans les brevets EP-191 666, EP-190 953, EP-241 337, EP-344 045, EP-402 212, EP-430 769 et EP-676 757.

Revenons maintenant à l'exemple précis de vitrage électrochrome utile à la comprehension de l'invention et représenté à la figure 1.

Toutes les couches sont à base d'oxyde(s) métallique(s) et déposées par pulvérisation cathodique à courant continu, assistée par champ magnétique et réactive (en atmosphère Ar/O₂ ou Ar/H₂/O₂ à partir de cibles métalliques appropriées).

La figure 1 représente un substrat de verre clair silico-sodo-calcique 1, de 1000 cm² et d'épaisseur 3 mm, surmonté du système électrochrome « tout-solides » constitué de l'empilement de couches 2 suivant :
↪ une première couche électroconductrice 3 en oxyde d'indium dopé à l'étain ITO de 150 nm d'épaisseur,
↪ une première couche 4 en matériau électrochrome anodique, en oxyde d'iridium hydraté HₓIrO_{y} de 37 nm d'épaisseur,
↪ un bi-couche électrolyte se décomposant en une couche 5 en oxyde de tungstène WO₃ de 200 nm d'épaisseur puis une couche 6 en oxyde de tantale de 200 nm ,
↪ une seconde couche 7 en matériau électrochrome cathodique, en oxyde de tungstène hydraté HₓWO₃ de 380 nm d'épaisseur,
↪ une seconde couche 8 électroconductrice en ITO de 280 nm d'épaisseur.

On a déposé la couche électroconductrice 3 avec des conditions de dépôt différentes de celles utilisées pour l'autre couche électroconductrice 8, de façon à ce que la première soit significativement plus dense, plus dure que la seconde qui, par comparaison, paraît plus « poreuse ». Ainsi, on garantit que la première couche ne sera pas touchée par le traitement selon l'invention.

Une variante consiste à modifier un peu les épaisseurs de l'exemple décrit plus haut, en utilisant une couche 5 de WO₃ de 100 nm, une couche 6 en oxyde de tantale de 100 nm, une couche 7 en HₓWO₃ de 280 nm et enfin une couche 8 d'ITO de 270 nm.

Douze échantillons identiques ont été réalisés ainsi, afin de pouvoir évaluer statistiquement l'efficacité du traitement selon l'invention, qui a consisté à faire une rainure/incision sur toutes les couches excepté la première à l'aide d'un faisceau laser approprié.

Les types de laser utilisables pour effectuer cette incision (ainsi que pour effectuer, alternativement, une dégradation contrôlée sans ablation) sont notamment du type laser EXCIMER pulsé (à KrF à 248 nm, TeCl à 308 nm, ArF à 193 nm, à XeF à 351 nmn, à F2 à 157 nm), ou laser à diode continu (à 532, 510, 578, 808 nm) ou laser « YAG » (à crystal de grenat d'yttrium et d'aluminium Y₃Al₅O₁₂) à 1 µm, ou laser CO₂ à 9,3 et 10,6 µm. Le choix du laser dépend notamment du spectre d'absorption de l'empilement de couches. Pour le régler de façon appropriée (notamment pour choisir entre une véritable ablation ou seulement une dégradation de la (des) couche(s) affectée(s), différents paramètres sont à ajuster et à prendre en compte, dont notamment la fluence du substrat (en J/cm²), la fréquence du laser (en Hz), la vitesse de déplacement de l'émetteur laser par rapport au substrat (mm/s), le nombre d'impulsions reçues en un point de la couche, la largeur de l'incision (en mm).

Dans le cas présent on a utilisé un laser EXCIMER à KrF, avec un faisceau laser de densité d'énergie 0,12 J/cm², monté sur un organe mobile au-dessus de l'empilement 2, de façon à effectuer une rainure 9 d'environ 100 µm de largeur et qui suit le contour de l'empilement 2 à une distance d'environ 2 mm de son bord, soit une rainure sensiblement carrée. On entend ici par contour de l'empilement, celui de toutes les couches fonctionnelles sauf la première, qui est de dimensions un peu supérieures afin de faciliter la pose des éléments de connectique, de façon connue.

On a alors observé, une fois l'empilement ainsi traité et les connexions électriques établies, que les courts-circuits périphériques obtenus à l'état coloré sont extrêmement bas et extrêmement reproductibles d'un échantillon à l'autre (à noter que cette évaluation est faite en référence à l'état coloré du système électrochrome, car c'est le plus défavorable : en effet, dans ce cas, les couches électrochromes actives 4 en oxyde d'iridium et 7 en HₓWO₃ sont bons conducteurs ioniques mais aussi électroniques).

Ainsi, les courants de fuite mesurés sont en moyenne de 4µA/cm, alors que des échantillons identiques non traités ont des courants de fuite de l'ordre de 300 à 400 µA/cm. (Ces échantillons comparatifs, non traités selon l'invention, sont margés de façon à ce que les deux couches électroconductrices soient décalées l'une par rapport à l'autre : avant dépôt, on masque les bords avec un scotch de 50 à 100 µm d'épaisseur, après dépôt, on le retire puis on fait les mesures).

Des tests ont ensuite été réalisés pour évaluer l'impact de cette quasi-suppression des courants de fuite périphériques sur l'effet mémoire du système.

A l'état décoloré (référence), sa transmission lumineuse T_{L} (selon l'Illuminant D₆₅) est de 65%. A l'état coloré maximum (référence), sa T_{L} est de 13,2%.

Une fois mis dans son état coloré par une mise sous tension appropriée, le circuit électrique est ouvert :
↪ Au bout de 2 heures, la T_{L} est de 14,5%,
↪ Au bout de 17 heures, la T_{L} est de 20,5%,
↪ Au bout de 27 heures, la T_{L} est de 23,6%
(essai conduit sur les 12 échantillons, valeurs de T_{L} moyennées).

Cela signifie qu'après un jour entier, le système est toujours coloré de manière significative, avec une forte amélioration par rapport aux systèmes non traités.

Il va de soi que le dispositif sur lequel le traitement laser a été effectué et représenté à la figure 1 est généralement « incomplet » en ce sens qu'on doit généralement le munir d'un moyen de protection au-dessus de l'empilement 2, par exemple en le feuilletant avec un verre ou un substrat souple de type PET, en réalisant un montage en double-vitrage où l'empilement est tourné du côté de la lame de gaz intercalaire et éventuellement muni d'un film protecteur. L'empilement peut aussi être encapsulé par un polymère/vernis étanche tel qu'un vernis polyuréthane ou époxy, ou un film de polyparaxylylène, ou une couche minérale du type SiO₂ ou Si₃N₄ ou tout autre couche minérale ou organo-minérale obtenue par voie sol-gel notamment..

La bande décolorée 10 de 2 mm sur le pourtour de l'empilement dûe au traitement laser est facilement dissimulable lors du montage du vitrage.

Le procédé selon l'invention est donc efficace et évite d'interrompre la succession de dépôts de couches pour former l'empilement.

## Revendications

1. Procédé de traitement d'un dispositif électrochimique comportant au moins un substrat porteur (1) muni d'un empilement (2) de couches fonctionnelles comprenant au moins une couche électrochimiquement active susceptible d'insérer réversiblement et simultanément des ions et qui est disposée entre deux couches électroconductrices, notamment un dispositif de type électrochrome avec un empilement (2) comprenant au moins, successivement, une première couche électroconductrice (3), une couche électrochimiquement active (4) susceptible d'insérer de manière réversible des ions tels que H⁺, Li⁺ et OH⁻, notamment en un matériau électrochrome anodique ou respectivement cathodique, une couche d'électrolyte (5, 6), une seconde couche électrochimiquement active (7) susceptible d'insérer de manière réversible lesdits ions, notamment en un matériau électrochrome cathodique ou respectivement anodique, et une seconde couche électroconductrice (8), ***caractérisé en ce qu'on*** inhibe localement, par un traitement thermique, ou par irradiation laser, ou par ablation localisée par un moyen mécanique tranchant ou par une irradiation laser, la fonctionnalité d'au moins une des couches fonctionnelles à l'exception d'une des couches électroconductrices (3, 8), de manière à délimiter dans l'empilement (2) un « contour inactif » ou une « zone inactive » non périphérique dudit dispositif.

2. Procédé selon la revendication 1, ***caractérisé en ce que*** l'empilement (2) de couches fonctionnelles ne contient que des couches en matériau solide.

3. Procédé selon l'une des revendications précédentes, ***caractérisé en ce que*** le traitement est effectué une fois le substrat (1) muni de l'ensemble des couches fonctionnelles de l'empilement (2).

4. Procédé selon l'une des revendications précédentes, ***caractérisé en ce qu'on*** inhibe localement la fonctionnalité d'une des couches au moins en incisant celle(s)-ci sur toute son (leurs) épaisseur(s) selon une ligne fermée (9) permettant de délimiter la zone inactive (10) de l'empilement (2), localisée entre ladite ligne fermée (9) et le bord dudit empilement (2).

5. Procédé selon la revendication 4, ***caractérisé en ce qu'on*** incise selon une ligne fermée ayant, dans des proportions plus réduites, un profil voisin ou identique à celui du bord de l'empilement (2).

6. Procédé selon l'une des revendications 4 à 5, ***caractérisé en ce qu'on*** opère l'incision par tout moyen mécanique, notamment un moyen tranchant ou un émetteur de jet de gaz, de liquide ou de particules abrasives, ou par irradiation laser.

7. Procédé selon l'une des revendications 1 à 6, ***caractérisé en ce qu'******on*** inhibe localement la fonctionnalité d'une des couches au moins de l'empilement (2) en la (les) dégradant à sa (leur) périphérie, notamment par un traitement thermique, ou par irradiation laser.

8. Procédé selon la revendication 7, ***caractérisé en ce que*** la dégradation localisée crée la zone inactive périphérique (10) voulue, dégradation notamment du type déshydratation, modification structurelle telle qu'une cristallisation.

9. Procédé selon l'une des revendications précédentes, ***caractérisé en ce que*** le traitement d'inhibition affecte l'ensemble des couches fonctionnelles sauf la première couche électroconductrice (3), en sélectionnant les paramètres de dépôt de celle-ci pour la rendre plus résistante, plus dure et/ou plus dense que les autres couches, notamment que la seconde couche électroconductrice (8).

10. Application du procédé selon la revendication 7 précédente en vue de réduire/supprimer les court-circuits périphériques dans l'empilement (2) de couches fonctionnelles en fonctionnement.

11. Application du procédé selon la revendication 1 ou la revendication 10, en vue de réduire/supprimer les court-circuits non périphériques dans l'empilement (2) de couches fonctionnelles en fonctionnement, notamment pour supprimer des défauts optiques ponctuels, les zones inactives non périphériques pouvant être après traitement colorées de façon permanente, par une encre par exemple.

12. Application du procédé selon la revendication 1 ou selon la revendication 10 en vue de créer des motifs.

13. Dispositif électrochimique de type électrochrome traité selon le procédé conforme à l'une des revendications 1 à 10, ***caractérisé en ce qu'il*** présente au moins une zone inactive périphérique (10) restant en permanence à l'état décoloré, notamment sous forme d'une marge.

14. Dispositif électrochimique traité selon le procédé conforme à l'une des revendications 1 à 10, ***caractérisé en ce qu'il*** présente en fonctionnement un courant de fuite inférieur ou égal à 20 µA/cm, notamment inférieur ou égal à 10 µA/cm ou à 5 µA/cm.

## Claims

1. Method of processing an electrochemical device having at least one carrier substrate (1) provided with a stack (2) of functional layers comprising at least one electrochemically active layer which is capable of reversibly and simultaneously inserting ions and which is arranged between two electroconductive layers, in particular a device of the electrochromic type with a stack (2) comprising at least, successively, a first electroconductive layer (3), an electrochemically active layer (4) capable of reversibly inserting ions such as H⁺, Li⁺ and OH⁻, in particular of an anodic or cathodic electrochromic material, respectively, an electrolyte layer (5, 6), a second electrochemically active layer (7) capable of reversibly inserting the said ions, in particular of a cathodic or anodic electrochromic material, respectively, and a second electroconductive layer (8), ***characterized in that*** the functionality of at least one of the functional layers, with the exception of one of the electroconductive layers (3, 8), is locally inhibited by a heat treatment or by laser irradiation, or by localized ablation, by a cutting mechanical means or by laser irradiation, so as to delimit an "inactive contour" or a non-peripheral "inactive region" in the stack (2).

2. Method according to Claim 1, ***characterized in that*** the stack (2) of functional layers contains only layers of solid material.

3. Method according to one of the preceding claims, ***characterized in that*** the processing is carried out once the substrate (1) has been provided with all the functional layers of the stack (2).

4. Method according to one of the preceding claims, ***characterized in that*** the functionality of at least one of the layers is locally inhibited by cutting it (them) over its (their) entire thickness(es) along a closed line (9) making it possible to delimit the inactive region (10) of the stack (2), which is located between the said closed line (9) and the edge of the said stack (2).

5. Method according to Claim 4, **characterized @In that** the cut is made along a closed line which, in smaller proportions, has a profile similar or identical to that of the edge of the stack (2).

6. Method according to one of Claims 4 and 5, ***characterized in that*** the cut is made by any mechanical means, in particular a cutting means or a means emitting a jet of gas, liquid or abrasive particles, or by laser irradiation.

7. Method according to one of Claims 1 to 6, ***characterized in that*** the functionality of at least one of the layers of the stack (2) is locally inhibited by degrading it (them) at its (their) periphery, in particular by a heat treatment or by laser irradiation.

8. Method according to Claim 7, ***characterized in that*** the localized degradation creates the desired peripheral inactive region (10), in particular degradation of the dehydration type, or structural modification such as crystallization.

9. Method according to one of the preceding claims, ***characterized in that*** the inhibition treatment affects all of the functional layers apart from the first electroconductive layer (3), by selecting the latter's deposition parameters in order to make it more resistant, harder and/or denser than the other layers, in particular than the second electroconductive layer (8)

10. Application of the method according to Claim 7 with a view to reducing/eliminating peripheral short-circuits in the stack (2) of functional layers during operation.

11. Application of the method according to Claim 1 or Claim 9 with a view to reducing/eliminating non-peripheral short-circuits in the stack (2) of functional layers during operation, in particular in order to eliminate point optical defects, it being possible for the non-peripheral inactive regions to be coloured permanently after processing, for example using an ink.

12. Application of the method according to Claim 1 or Claim 9 with a view to creating patterns.

13. Electrochemical device of the electrochromic type processed using the method according to one of Claims 1 to 9, ***characterized in that*** it has at least one peripheral inactive region (10) remaining permanently in the uncoloured state, in particular in the form of a margin.

14. Electrochemical device processed using the method according to one of Claims 1 to 9, ***characterized in that*** during operation, it has a leakage current less than or equal to 20 µA/cm, in particular less than or equal to 10 µA/cm or 5 µA/cm.

## Patentansprüche

1. Verfahren zur Behandlung einer elektrochemischen Vorrichtung, die mindestens ein Substrat (1) umfasst, das mit einem Aufbau (2) aus funktionellen Schichten versehen ist, der mindestens eine elektrochemisch aktive Schicht, die in der Lage ist, reversibel und gleichzeitig Ionen einzulagern und zwischen zwei elektrisch leitfähigen Schichten angeordnet ist, umfasst, insbesondere einer elektrochromen Vorrichtung mit einem Aufbau (2), der mindestens nacheinander eine erste elektrisch leitfähige Schicht (3), eine elektrochemisch aktive Schicht (4), die in der Lage ist, Ionen wie H⁺, Li⁺ und OH⁻ reversibel einzulagern, speziell aus einem anodischen bzw. kathodischen elektrochromen Material, eine Elektrolytschicht (5, 6), eine zweite elektrochemisch aktive Schicht (7), die in der Lage ist, diese Ionen reversibel einzulagern, speziell aus einem kathodischen bzw. anodischen elektrochromen Material, und eine zweite elektrisch leitfähige Schicht (8) umfasst, **dadurch gekennzeichnet, dass** durch eine Wärmebehandlung oder durch Laserbestrahlung, oder durch lokale Abtragung durch ein schneidendes mechanisches Mittel oder eine Laserbestrahlung die Funktionalität mindestens einer der funktionellen Schichten mit Ausnahme einer der elektrisch leitfähigen Schichten (3, 8) derart lokal gehemmt wird, dass in dem Aufbau (2) ein "inaktiver Umfang" oder ein nicht am Umfang befindlicher "inaktiver Bereich" der Vorrichtung abgegrenzt wird.

2. Verfahren nach Anspruch 1, **dadurch gekennzeichnet, dass** der Aufbau (2) aus funktionellen Schichten nur Schichten aus Feststoff enthält.

3. Verfahren nach einem der vorhergehenden Ansprüche, **dadurch gekennzeichnet, dass** die Behandlung durchgeführt wird, nachdem das Substrat (1) mit allen funktionellen Schichten des Aufbaus (2) versehen worden ist.

4. Verfahren nach einem der vorhergehenden Ansprüche, **dadurch gekennzeichnet, dass** die Funktionalität mindestens einer der Schichten lokal gehemmt wird, indem diese über ihre gesamte Dicke entlang einer geschlossenen Linie (9), die es erlaubt, den inaktiven Bereich (10) des Aufbaus (2), der zwischen der geschlossenen Linie (9) und dem Rand dieses Aufbaus (2) lokalisiert ist, lokal zu begrenzen, eingeschnitten wird/werden.

5. Verfahren nach Anspruch 4, **dadurch gekennzeichnet, dass** entlang einer geschlossenen Linie eingeschnitten wird, die im kleineren Maßstab ein Profil hat, das dem des Randes des Aufbaus (2) ähnlich ist oder mit diesem identisch ist.

6. Verfahren nach Anspruch 4 oder 5, **dadurch gekennzeichnet, dass** das Einschneiden durch ein beliebiges mechanisches Mittel, insbesondere ein Schneidmittel oder ein Mittel, das einen Gasstrahl, einen Flüssigkeitsstrahl bzw. einen Strahl aus Schleifteilchen ausstößt, oder durch Laserbestrahlung durchgeführt wird.

7. Verfahren nach einem der Ansprüche 1 bis 6, **dadurch gekennzeichnet, dass** die Funktionalität mindestens einer der Schichten des Aufbaus (2) lokal gehemmt wird, indem sie an ihrem Umfang, insbesondere durch eine Wärmebehandlung oder eine Laserbestrahlung, verschlechtert wird.

8. Verfahren nach Anspruch 7, **dadurch gekennzeichnet, dass** der gewünschte inaktive Umfangsbereich (10) durch die lokale Verschlechterung, die insbesondere eine Dehydratation oder eine Strukturmodifizierung wie eine Kristallisation ist, erzeugt wird.

9. Verfahren nach einem der vorhergehenden Ansprüche, **dadurch gekennzeichnet, dass** die hemmende Behandlung alle funktionelle Schichten außer der ersten elektrisch leitfähigen Schicht (3) betrifft, indem die Abscheideparameter für diese so ausgewählt werden, dass diese widerstandsfähiger, härter und/oder dichter als die anderen Schichten, insbesondere als die zweite elektrisch leitfähige Schichten (8), gemacht wird.

10. Anwendung des Verfahrens nach Anspruch 7, um bei Betrieb Kurzschlüsse am Umfang des Aufbaus (2) aus funktionellen Schichten zu verringern/zu vermeiden.

11. Anwendung des Verfahrens nach Anspruch 1 oder 9, um bei Betrieb nicht am Umfang auftretende Kurzschlüsse in dem Aufbau (2) aus funktionellen Schichten zu verringern/zu vermeiden, insbesondere, um punktuelle optische Fehler zu verhindern, wobei die nicht am Umfang befindlichen inaktiven Bereiche nach Behandlung beispielsweise durch eine Druckfarbe bleibend eingefärbt sein können.

12. Anwendung des Verfahrens nach Anspruch 1 oder 9 zur Erzeugung von Mustern.

13. Elektrochemische Vorrichtung vom elektrochromen Typ, die gemäß dem Verfahren nach einem der Ansprüche 1 bis 9 behandelt worden ist, **dadurch gekennzeichnet, dass** sie mindestens einen am Umfang befindlichen inaktiven Bereich (10) aufweist, der ständig im entfärbten Zustand, insbesondere in Form eines Randes, bleibt.

14. Elektrochemische Vorrichtung, die gemäß dem Verfahren nach einem der Ansprüche 1 bis 9 behandelt worden ist, **dadurch gekennzeichnet, dass** sie bei Betrieb einen Stromverlust von kleiner als oder gleich 20 µA/cm und insbesondere von kleiner als oder gleich 10 µA/cm oder 5 µA/cm aufweist.
